(19) Europäisches Patentamt / European Patent Office / Office européen des brevets

(11) **EP 2 194 690 A1**

(12) **EUROPEAN PATENT APPLICATION**

(43) Date of publication:
**09.06.2010 Bulletin 2010/23**

(51) Int Cl.:
**H04L 29/06** *(2006.01)*

(21) Application number: **08305893.3**

(22) Date of filing: **08.12.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | • **Ioannidis, Stratis**<br>  **Toronto, Ontario M4Y 1N1 (CA)**<br>• **Massoulie, Laurent**<br>  **92420 Vaucresson (FR)** |
| (71) Applicant: **Thomson Licensing**<br>**92443 Issy-les-Moulineaux Cedex (FR)** | (74) Representative: **Ruellan-Lemonnier, Brigitte**<br>**Thomson**<br>**1, rue Jeanne d'Arc**<br>**92443 Issy-les-Moulineaux Cedex (FR)** |
| (72) Inventors:<br>• **Chaintreau, Augustin**<br>  **75006 Paris (FR)** | |

(54) **Devices, system and method for computing an optimal n-dimensional vector of content injection rates for user communication equipments**

(57)    A method is intended for computing an optimal n-dimensional vector of injection rates of content ($\vec{x}$) for n users comprising communication equipments ($CE_1$-$CE_3$) coupled to a communication network (CN). This method comprises the steps of: i) determining the gradient of an objective function ($f(\vec{x})$) representative of n expectations of a non-increasing utility function ($h_i(Y_i)$) depending on the age ($Y_i$) of availability of a content into a user communication equipment ($CE_i$), and ii) applying a gradient descent algorithm to this objective function gradient to determine an optimal n-dimensional vector of injection rates of content ($\vec{x}$).

FIG.1

EP 2 194 690 A1

**Description**

Technical field

The present invention relates to content transmission to and between user communication equipments in a peer-to-peer (or "P2P") environment, and more precisely to the optimization of such transmissions in a P2P environment.

Background of the invention

The proliferation of communication equipments (and notably mobile telephones or portable equipments) with increased storage and (wireless) communication capabilities has created a new networking environment for peer-to-peer applications. Now users can take advantage of opportunistic contacts to share content in a peer-to-peer manner, thus extending communication network coverage and capacity. These opportunistic contacts and exchanges through content sharing depend highly on the social behavior of the users. Indeed, people meet (or contact) often with family, friends and co-workers, and less frequently with people outside their social circle.

As it is known by the man skilled in the art, the social network which is formed by the opportunistic contacts and exchanges between user communication equipments, can be modelled by a contact graph describing which users meet and how often they do so. The topology of this contact graph may impact some specific peer-to-peer applications, such as the distribution of dynamic content to users having subscribed to a content distribution service offered by a service provider. In this type of application user communication equipments might receive content updates from a news-feed, a blog or a traffic congestion monitoring service, for instance, and users share their downloaded content with each other in an opportunistic manner: when two user communication equipments meet (or contact), the one having the most recent content pushes it to the one having the oldest content. So, the information provided to users should be as "fresh" as possible. It is important to note that the invention does not require that contacts between users follow a contact graph (or any equivalent). The contacts between users only have to be stationary (which means that latencies are stationary).

Few documents relative to the impact of the topology created by opportunistic contacts have been published. Some algorithms taking advantage of topological properties of opportunistic contacts have been proposed for publish/subscribe systems, or routing and query propagation. These algorithms are notably described in the documents of i) E. Yoneki, P. Hui, S. Chan, and J. Crowcroft, "A socio-aware overlay for publish/subscribe communication in delay tolerant networks", Proc. of ACM MSWiM, 2007, ii) P. Costa, C. Mascolo, M. Musolesi, and G.-P. Picco, "Socially-aware routing for publish-subscribe in delay-tolerant mobile ad hoc networks", IEEE JSAC Special issue on Delay-Tolerant Networks, 2008, iii) A. Balasubramanian, B. Levine, and A. Venkataramani, "DTN routing as a resource allocation problem", Proc. of ACM SIGCOMM, 2007, iv) A. G. Miklas, K. K. Gollu, K. K. W. Chan, S. Saroiu, P. K. Gummadi, and E. de Lara, "Exploiting social interactions in mobile systems", Proc. of Ubicomp, 2007, and v) V. Srinivasan, M. Motani, and W. T. Ooi, "Analysis and implications of student contact patterns derived from campus schedules", Proc. of ACM MobiCom, 2006.

These algorithms exploit node centrality, or friendship relationships, or else metrics of contact usefulness. But they do not really identify the conditions under which opportunistic content dissemination (or flooding) provides fresh information. Therefore, they are not really capable of determining optimal injection rates of content for groups of users.

Summary of the invention

So the object of this invention is to improve the situation, and notably to improve the rate allocation from a content server.

For this purpose, the invention provides a method, intended for computing an optimal n-dimensional vector of injection rates of content for n users comprising communication equipments coupled to a communication network, and comprising the steps of:

  i) determining the gradient of an objective function representative of n expectations of a non-increasing utility function depending on the age of availability of a content into a user communication equipment, and
  ii) applying a gradient descent algorithm to this objective function gradient to determine the optimal n-dimensional vector of injection rates of content.

The method according to the invention may include additional characteristics considered separately or combined, and notably:

  -    in step i) one may determine the objective function gradient with latencies that are representative of the times required for transmitting a content from each one of the n user communication equipments to each other one of these n user communication equipments through the communication network;

> in step i) each of the n user communication equipments may determine n-1 latencies and one non-increasing utility function, and then one may determine the objective function gradient from the latencies and non-increasing utility functions determined by the n user communication equipments;
> in a variant, in step i) each of the n user communication equipments may determine n-1 contact rates, each representative of the rate at which two user communication equipments contact each other, and one non-increasing utility function, then each of the n user communication equipments may deduce n-1 latencies from the n-1 contact rates, and then one may determine the objective function gradient from the latencies and non-increasing utility functions deduced or determined by the n user communication equipments;

- in a variant, in step i) each of the n user communication equipments may determine n-1 estimations of the gradient of the expectations of the non-increasing utility functions depending on the age of availability of a content originating from the n-1 other user communication equipments, and then one may determine the objective function gradient from the non-increasing utility function expectation gradients estimated by the n user communication equipments;

> at some arbitrary time instant(s) each of the n user communication equipments may generate a dummy event to pretend it has received an update of the content. In this case, each time one of the n user communication equipments contacts another one of these n user communication equipments, it may communicate to the latter a first age representative of the time instant at which it has received the content and a second age representative of the time instant at which it has generated the dummy event for this content. Therefore, in step i) each of the n user communication equipments may determine n-1 estimations of non-increasing utility function expectation gradient associated respectively to the n-1 other user communication equipments, each estimation being representative of the result of a temporal integration of the difference between a non-increasing utility function, depending on the second age representative of the time instant of generation of the dummy event by this user communication equipment, and a non-increasing utility function, depending on the first age representative of the time instant of reception of this content by this user communication equipment, and then in step ii) one may determine the objective function gradient from the estimations of non-increasing utility function expectation gradients determined by the n user communication equipments.

The invention also provides a system, intended for computing an optimal n-dimensional vector of injection rates of content for n users comprising communication equipments coupled to a communication network, and comprising i) first computation means arranged for determining the gradient of an objective function representative of n expectations of a non-increasing utility function depending on the age of availability of a content into a user communication equipment, and ii) second computation means arranged for applying a gradient descent algorithm to this objective function gradient to determine the optimal n-dimensional vector of injection rates of content.
The system according to the invention may include additional characteristics considered separately or combined, and notably:

- its first computation means may be arranged for determining the objective function gradient with latencies that are representative of the times required for transmitting a content from each one of the n user communication equipments to each other one of these n user communication equipments through the communication network;

> its first computation means may comprise i) first sub-means located into each of the n user communication equipments and each arranged for determining locally n-1 latencies and one non-increasing utility function, and ii) a centralized second sub-means arranged for determining the objective function gradient from the latencies and non-increasing utility functions determined by the first sub-means of the n user communication equipments;
> in a variant, its first computation means may comprise i) first sub-means located into each of the n user communication equipments and each arranged for determining locally n-1 contact rates, each representative of the rate at which two of the user communication equipments contact each other, and one non-increasing utility function, then for deducing n-1 latencies from these n-1 contact rates, and ii) a centralized second sub-means arranged for determining the objective function gradient from the latencies and non-increasing utility functions deduced or determined by the n user communication equipments;

- in a variant its first computation means may comprise i) first sub-means located into each of the n user communication equipments and each arranged for determining n-1 estimations of the gradient of the expectations of the non-increasing utility functions depending on the age of availability of a content originating from the n-1 other user communication equipments, and ii) a centralized second sub-means arranged for determining the objective function gradient from the non-increasing utility function expectation gradients estimated by the first sub-means of the n user communication equipments;

➢ each first sub-means of a user communication equipment may be arranged i) for generating a dummy event, at an arbitrary time instant, to pretend its user communication equipment has received an update of the content, ii) for determining a first age representative of the time instant at which its user communication equipment has received this content and a second age representative of the time instant at which it has generated the dummy event for this content, iii) each time its user communication equipment contacts another one of the n user communication equipments, for ordering its user communication equipment to communicate the first age and the second age to the other contacted user communication equipment, and iv) for determining n-1 estimations of non-increasing utility function expectation gradient associated respectively to the n-1 other user communication equipments, each estimation being representative of the result of a temporal integration of the difference between a non-increasing utility function, depending on the second age representative of the time instant of generation of the dummy event by the user communication equipment, and a non-increasing utility function, depending on the first age representative of the time instant of reception of the content by the user communication equipment. In this case the centralized second sub-means may be arranged for determining the objective function gradient from the estimations of non-increasing utility function expectation gradients determined by the first sub-means of the n user communication equipments.

The invention also provides a first computation device, intended for being located into a network equipment connected to a communication network to which are coupled user communication equipments, and comprising a second computation means arranged for applying a gradient descent algorithm to a gradient of an objective function representative of n expectations of a non-increasing utility function depending on the age of availability of a content into n different user communication equipments, in order to determine an optimal n-dimensional vector of injection rates of content for the n user communication equipments.

Such a first computation device may further comprise a centralized second sub-means arranged for determining the objective function gradient from latencies, which have been determined by the n user communication equipments and which are representative of the times required for transmitting a content from each one of these n user communication equipments to each other one of these n user communication equipments through the communication network, and non-increasing utility functions, which have been determined by the n user communication equipments.

In a variant, the first computation device may comprise a centralized second sub-means arranged for determining the objective function gradient from n groups respectively determined by the n user communication equipments, and each comprising n-1 estimations of the gradient of the expectations of non-increasing utility functions depending on the age of availability of a content originating from n-1 user communication equipments differing from its associated user communication equipment.

The invention also provides a second computation device, intended for being located into a user communication equipment connected to a communication network, and comprising a first sub-means arranged for determining locally n-1 latencies, representative of the times required for transmitting a content from its user communication equipment to n-1 other user communication equipments through the communication network, and one non-increasing utility function, depending on the age of availability of a content into its user communication equipment.

The first sub-means of such a second computation device may be arranged for determining locally n-1 contact rates, each representative of the rate at which two user communication equipments contact each other, and one non-increasing utility function, then for deducing n-1 latencies from these n-1 contact rates.

Moreover the first sub-means may be arranged for ordering its user communication equipment to transmit said n-1 determined latencies and the determined non-increasing utility function to a chosen network equipment connected to the communication network.

In a variant, the second computation device may comprise a first sub-means arranged:

- for generating a dummy event, at an arbitrary time instant, to pretend its user communication equipment has received an update of the content,

- for determining a first age representative of the time instant at which its user communication equipment has received this content and a second age representative of the time instant at which it has generated this dummy event for this content,

- for ordering its user communication equipment, each time it contacts one of the n-1 other user communication equipments, to communicate this first age and this second age to the other contacted user communication equipment, and

- for determining n-1 estimations of non-increasing utility function expectation gradient associated respectively to the n-1 other user communication equipments, each estimation being representative of the result of a temporal integration of the difference between a non-increasing utility function, depending on the second age representative of the time instant of generation of the dummy event by the user communication equipment, and a non-increasing utility function, depending on the first age representative of the time instant of reception of this content by the user communication equipment.

The age generated in a user communication equipment j with the dummy event is additionally propagated among the other user communication equipments i (in fact a dummy age is used by an other user communication equipment i to let another user communication equipment k knows that an event in the user communication equipment j might have benefited them (in that case, through the user communication equipment i)).

This first sub-means may be also arranged for ordering its user communication equipment to transmit its n-1 estimations to a chosen network equipment connected to the communication network.

Brief description of the figures

Other features and advantages of the invention will become apparent on examining the detailed specifications and Annex hereafter and the appended drawings, wherein:

- figure 1 schematically and functionally illustrates a server and three user communication equipments connected to a communication network and in which are distributed parts of an example of embodiment of a system according to the invention, and
- figure 2 is a temporal diagram illustrating the evolution of true (first) age and dummy (second) age as a function of time in a user communication equipment.

Detailed description of the preferred embodiment

The appended drawings may serve not only to complete the invention, but also to contribute to its definition, if need be.

The invention aims at offering a system (S), and an associated method, intended for computing an optimal n-dimensional vector of injection rates of content ($\bar{x}$) for a group of n users (i, with i = 1 to n) comprising communication equipments ($CE_i$) coupled to a communication network (CN). It is important to note that the invention concerns dynamic contents which are transmitted in a peer-to-peer (P2P) environment to communication equipments of users having subscribed to a service and which are updated when they have evolved or change.

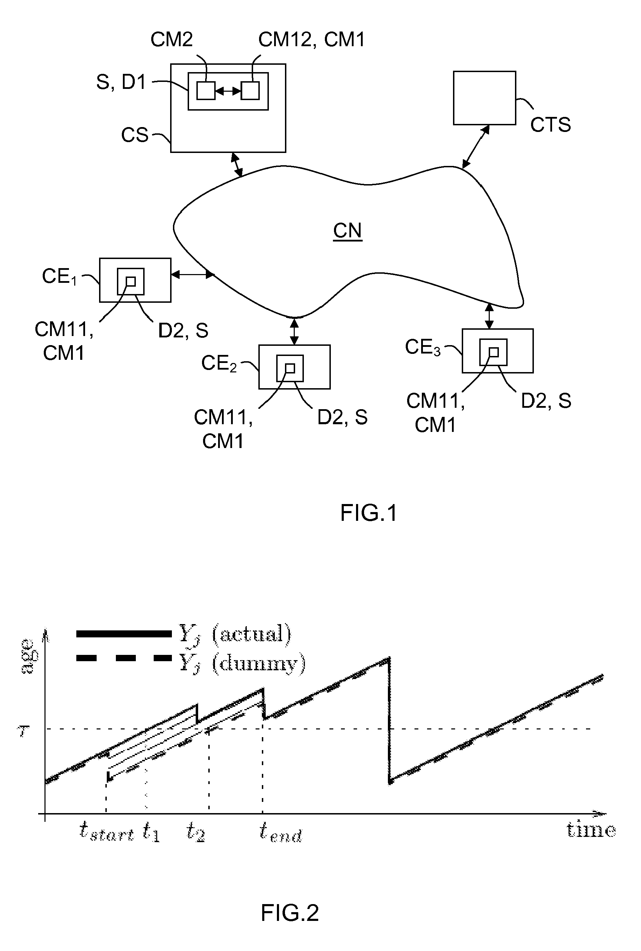

As illustrated in figure 1, in the following description it will be considered that contents are transmitted to user mobile (or cellular) communication equipments $CE_i$ through a mobile (or cellular) communication network CN. But the invention is not limited to this application. Indeed, the communication network may be also of the wired (or fixed) type, such as a DSL network or an optical fiber network or else a cable network, as soon as the sum of user rate is limited by a single capacity. Moreover, the user communication equipments $CE_i$ may be of any type as soon as they are capable of establishing communications therebetween in a peer-to-peer (P2P) mode. So a user communication equipment $CE_i$ may be a fixed personal computer, a laptop, a content receiver (for instance a home gateway or a set-top box (STB) located in the user's home premise), a mobile or cellular telephone, a fixed telephone, or a personal digital assistant (PDA), provided that it comprises a communication modem (or any equivalent communication means).

Moreover, in the following description it will be considered that the contents and their updates are initially provided by a content server CTS which is coupled to the communication network CN.

As it is schematically illustrated in figure 1, the invention concerns a group of n user communication equipments (here mobile telephones) $CE_i$. In this non limiting example the group comprises three mobile telephones $CE_1$ to $CE_3$ (i = 1 to 3, n = 3) that are served by a single service provider.

One denotes by V = {1, 2, ..., n} the group (or set) of n users. Moreover one considers that the service provider pushes a new content to the mobile telephone $CE_i$ of user $i \in V$ according to a Poisson process with a rate $x_i$, hereafter called the injection rate at user i. More, one denotes by $\vec{x}$ the n-dimensional vector of injection rates ($\vec{x} = (x_1, x_2, ..., x_n)$), and one assumes that the service provider's total bandwidth capacity is $\mu$ (i.e. $\sum_i x_i \leq \mu$ ).

It is important to note that the rates may be allocated according to different strategies. For instance, it may be a uniform allocation in which every user (i) receives an equal share of the total bandwidth ($x_i = \mu/n$ for every i).

It is also important to note that each time a mobile telephone $CE_i$ receives a content, it stores locally this content with a time-stamp representative of the time at which it was originally downloaded from the content server CTS of the service provider for the first time. One denotes by $t_i(t)$ the time-stamp of a content which is stored into the mobile telephone $CE_i$ of a user i at time t.

In the non limiting example where the communication network CN is a mobile network, one considers that a user $i \in V$ contacts or meets another user $j \in V$ when their user mobile telephones $CE_i$ and $CE_j$ are within each other's transmission range. Contacts are considered as symmetric (j contacts i whenever i contacts j), and they last for a time that is negligible compared to the inter-contact time, namely the time between two consecutive contacts. A user i shares the content he has downloaded from the service provider with other users j ($j \neq i$) he meets (or contacts). This sharing is done according to the following diffusion/gossiping scheme: a user i will copy user j's content when they meet, if the content stored at j is more recent than the content stored at i, i.e., $t_i < t_j$. So, when two users i and j meet, the time-stamp associated to a stored content becomes $max(t_i, t_j)$ in both mobile telephones $CE_i$ and $CE_j$.

With the above assumptions and/or definitions it is possible to characterize the age $Y_i$ of the content stored into the mobile telephone $CE_i$ of each user $i \in V$: $Y_i(t) = t - t_i(t)$.

It is important to note that one considers the distribution of the age $Y_i$ at user i in a steady state case (or, informally, once a sufficiently long time has passed). The content age depends both on the injection rate vector $\vec{x}$ and on how users contact each other.

In the following (and not limiting) description it will be assumed that the inter-contact time between any two users i, $j \in V$ is distributed exponentially. Hence, one assumes that a user i contacts another user j according to a Poisson process with contact rate $q_{ij} \geq 0$. In addition, one assumes that the contacts between distinct pairs (i, j) are independent, and that contacts are symmetric (i.e. $q_{ij} = q_{ji}$).

The above described environment can be represented by a weighted and undirected graph G(V, E), called contact graph, and whose vertex set is the set (or group) V of n users. In this contact graph the variable E designates an edge between two users. Such an edge exists if the two users i and j meet with a non-zero frequency (i.e. E = {(i, j) s.t. $q_{ij} > 0$}). An edge is associated to a weight which is equal to the corresponding contact rate $q_{ij}$.

One denotes by $q_i = \Sigma_{j \neq i} q_{ij}$ the aggregate rate with which i contacts the n-1 other users j. One also denotes by $q_{max} = max\ q_i$ and $q_{min} = min\ q_i$ the aggregate contact rates of the "most social" user and the "least social" user of a group of n users, respectively. Note that the number of content exchanges a user i engages in (i.e., the bandwidth cost incurred on user mobile telephone $CE_i$) is bounded by the corresponding aggregate rate $q_i$.

One further assumes that the contact graph contains all the contacts that are used for exchanging content. So, all possible contacts may be used or users may exploit only a fraction of their contacts for sharing content (in the extreme case certain pairs of users may never share content in spite of being physically close to each other). Users may ignore contacts for several reasons, such as for limiting bandwidth use and hence power consumption, or for giving preferences to users that are close in a social sense.

A property of the contact graph G(V, E) is its edge expansion $h_G$ which can be defined by

$$h_G = \min_{A \subset V} \frac{vol(\partial A)}{\min(|A|, |A^c|)} \text{ , where } \text{vol(B)} = \sum_{(i,j) \in B} q_{ij} \text{ is the sum of the weights of all edges in an edge set } B \subset E$$

and $\partial A$ is the set of edges from A to $A^c$ = V\A (with A c V), and where $A^c$ denotes the complement of A in set V (i.e. {i in V | i not in A}).

Computing the edge expansion of a given graph G(V, E) is a NP-hard problem (i.e. any problem whose solution can be checked in polynomial time can be reduced to this problem).

However, the edge expansion is closely related to the graph's spectral gap, which can be computed in polynomial time. So, one has the relation $q_{min} \lambda / 2 \leq h_G < q_{max} \sqrt{\lambda / 2}$ **(1)**, where $\lambda$ is the second smallest eigenvalue of the graph's Laplacian matrix. For instance, one may use the lower bound of relation (1) to obtain a pessimistic estimate of the edge expansion.

If one assumes, as mentioned before, that the service provider allocates its bandwidth capacity uniformly over all users of a group, then each user i receives a new content directly from this service provider at rate $\mu/n$. So, a user can share this content with other users of his group according to the above described content sharing protocol over the contact graph G(V, E). One can show that, if the users do not share their content, the expected age $E[Y_i]$ of the content at any user i grows as $n/\mu$, hence linearly in n. So, the ages can grow much slower (as log(n)) when content is shared.

One can also show that, if the service provider has a bandwidth capacity $\mu$ and implements the above mentioned uniform bandwidth capacity allocation, the expected age $E[Y_i]$, seen by any user $i \in V$ in steady state, satisfies to the following relation:

$$E[Y_i] \leq \frac{2}{\mu}\left(2e^{-1/2} + \log(n)\right) h_G^{-1} \log n \quad (2).$$

Therefore the content sharing scales very well if the edge expansion $h_G$ of the contact graph G(V, E) is bounded away from zero, as the group size n grows. Even though the service provider commits only a constant amount of bandwidth to serve the n users, sharing the content guarantees an age $Y_i$ that grows very slowly with n (as log(n), for instance). Graphs that exhibit this property are called expander graphs.

Relation (2) can be used on any contact graph G(V, E) to obtain an upper-bound on the age $Y_i$ at any user i in terms of edge expansion $h_G$.

If one combines the lower bound of relation (1) with relation (2), one can see that, if both the capacity ($\mu$) of the service provider and the bandwidth consumption at users ($q_{mm}$) grow as log n, then the expected age $E[Y_i]$ of a content will be no more than constant, provided that the spectral gap $\lambda$ is bounded from below. Thus, there is a trade-off between the bandwidth consumption and the expected age $E[Y_i]$.

As mentioned above, for contact graphs G(V, E) with a constant expansion, the system scales well even if the service provider injects updated content with a constant rate. But, the relative position of a user i in the contact graph G(V, E) may impact the way his mobile telephone $CE_i$ disseminates the content updates. So, the respective injection rates of the n users of a group can be allocated optimally (in other words, an optimal rate allocation vector $\vec{x}$ (for a group of n users) can be computed), if and only if the optimization process is convex.. The invention aims at determining such an optimal rate allocation vector $\vec{x}$.

For this purpose the invention offers notably a method intended for computing an optimal n-dimensional rate allocation vector $\vec{x}$ for n users. This method comprises two main steps.

A first main step (i) consists in determining the gradient of an objective function $f(\vec{x})$ which is representative of n expectations of a non-increasing utility function $h_i(Y_i)$ which depends on the age $Y_i$ of availability of a content into a user communication equipment $CE_i$.

A second main step (ii) consists in applying a gradient descent algorithm to the objective function gradient (determined during the first main step (i)) in order to determine the optimal n-dimensional vector of injection rates of content $\vec{x}$.

The utility function $h_i(Y_i)$ is a quantity (or variable) which quantify the level of happiness or satisfaction of a user i when the content he stores in his mobile telephone $CE_i$ is more recent. This non-increasing utility function $h_i(Y_i)$ is defined into the real set R. So it may be positive to express a level of satisfaction or negative to express a level of dissatisfaction or loss of profit for a certain age $Y_i$.

The utility a user receives from a given age depends on the user preferences but also on the nature of the content provided.

A first example of non-increasing utility function $h_a(Y_i)$ can be $h_a(Y_i) = 1$ $Y_i < \tau$. In this discontinuous utility, an age threshold value $\tau$ exists after which the content is worthless. The user is considered to be indifferent to all ages below that threshold $\tau$.

A second example of non-increasing utility function $h_b(Y_i)$ can be $h_b(Y_i) = 1$ $Y_i < \tau$ $(1 - Y_i/\tau)$. This second utility function also exhibits a threshold behavior. However, a user with such a utility function differentiates between values below the threshold - there is greater utility in small ages.

A third example of non-increasing utility function $h_c(Y_i)$ can be $h_c(Y_i) = 1 / (Y_i + 1)$. With this third utility function even a very old content has a vanishing but non-zero value for the user.

A fourth example of non-increasing utility function $h_d(Y_i)$ can be $h_d(Y_i) = -Y_i$. The negative utility function values express a dissatisfaction or loss which incurs linearly in terms of the age $Y_i$.

In a statistical approach, the objective function $f(\vec{x})$ can be expressed by the following relation:

$$f(\vec{x}) = E_{\vec{x}} \sum_{i=1}^{n} [h_i(Y_i)]$$
$$= \sum_{i=1}^{n} E_{\vec{x}}[h_i(Y_i)] \quad (3),$$

where $E_{\vec{x}}[h(Y_i)]$ is the expectation of the non-increasing utility function $h_i(Y_i)$, given that the rate allocation vector is $\vec{x}$.

A natural goal for a service provider is to maximize the aggregated utility among all users of a group, i.e. the "social welfare".

One can show that, if the user utilities ($h_i : R_+ \to R$, $1 \leq i \leq n$) are non increasing functions, then the social welfare maximization is a convex optimization problem, and in particular, the objective function $f(\vec{x}) = \sum_{i=1}^{n} E_{\vec{x}}[h_i(Y_i)]$ is concave.

So, any local maximum of the objective function $f(\vec{x})$ is a global maximum, and the optimization problem can be solved efficiently by a gradient descent algorithm.

The proof of the above assertion is given in Annex 1.

It is important to note that the above assertion extends to any function of the expected utilities $E_{\vec{x}}[h_i(Y_i)]$ that preserves concavity, such as the min function.

As illustrated in the non limiting example of figure 1, the method according to the invention can be implemented by means of a system S which is distributed both in the mobile telephones $CE_i$ and in a network equipment CS which is connected to (or accessible through) the communication network CN.

This network equipment CS can be a server, for instance.

The part of the system S which is located into the network equipment CS is called first computation device D1, while the part of the system S which is located into a mobile telephone $CE_i$ is called second computation device D2.

As illustrated, a second computation device D2 comprises a first sub-module CM11 of a first computation module CM1 which further comprises a second sub-module CM12. In the example of embodiment illustrated in figure 1, the second sub-module CM12 is a part of the first computation device D1. So, it is located into the network equipment CS.

The first computation module CM1 is arranged for determining the gradient $\nabla f$ of the objective function $f(\vec{x})$.

Also as illustrated, the first computation device D1 further comprises a second computation module CM2 (as illustrated in figure 1).

The second computation module CM2 is arranged for applying a chosen gradient descent algorithm to the objective function gradient $\nabla f$ in order to determine an optimal injection rate vector $\vec{x}$.

The system S illustrated in figure 1 is intended for implementing the method according to the invention in a first or second manner.

The first manner is called "centralized" manner. It consists in determining, during the first main step (i), the gradient $\nabla f$ of the objective function $f(\vec{x})$ with latencies $s_{ij}$, which, as mentioned above, are representative of the times required for transmitting a content from each one of the n user mobile telephones $CE_i$ to each other one $CE_j$ of these n user mobile telephones through the communication network CN.

To this effect, each user mobile telephone $CE_i$ may first determine n-1 latencies $s_{ij}$ and one non-increasing utility function $h_i(Y_i)$ by means of the first sub-module CM11 it comprises.

These n-1 latencies $s_{ij}$ (random samples) may be determined or generated by a first sub-module CM11 from the n-1 contact rates $q_{ij}$ of its mobile telephone $CE_i$ with the n-1 other mobile telephones $CE_j$ ($j \neq i$). This determination can be obtained as follows.

Consider a graph $\widehat{G}_n$ that has the same nodes (or users) and edges as the contact graph $G_n$ (or G(V, E)) and whose associated weights are exponentially distributed random variables with means $1/q_{ij}$, for all $(i, j) \in E$. It is recalled that the contact rates $q_{ij}$ are each representative of the rate at which two user communication equipments $CE_i$ and $CE_j$ contact each other. Then, for a fixed i, the latencies $s_{ij}$ are jointly distributed as the lengths of the shortest paths from i to any other node in the graph $\widehat{G}_n$ . Hence, (samples of) the latencies $s_{ij}$ can be obtained by running an algorithm over $\widehat{G}_n$ , such as the Dijkstra's algorithm, for instance.

In a variant, the n-1 latencies $s_{ij}$ may be also obtained directly by a first sub-module CM11 through an observation of the communication network CN. Indeed, these latencies $s_{ij}$ are the latencies of packets that are flooded from user i to the n-1 other users j ($j \neq i$). In other words the latencies can be observed "backwards", i.e. at a given time t one may observe that time s_{i,j} such that the latest packet received from j in i could have been sent at time t-s_{i,j}.

The first sub-module CM11 of a user mobile telephone $CE_i$ may determine the non-increasing utility function $h_i(Y_i)$ associated to a content by observing in the past how the user i uses this content as a function of its age. It is important to note that the utility function $h_i(Y_i)$ can be set in advance by a protocol or can be measured by collecting aggregate feedback from the users, for instance.

Once the first sub-module CM11 of a user mobile telephone $CE_i$ has determined n-1 latencies $s_{ij}$ and one non-

increasing utility function $h_i(Y_i)$, it may order its user mobile telephone $CE_i$ to transmit them to the second sub-module CM12 which is located into the network equipment CS.

Once the second sub-module CM12 has received n-1 latencies $s_{ij}$ and one non-increasing utility function $h_i(Y_i)$ from each user mobile telephone $CE_i$, it is arranged for determining (or evaluating) the objective function gradient $\nabla f$ from the whole received latencies $s_{ij}$ and non-increasing utility functions $h_i(Y_i)$.

In fact, it is preferable to compute an unbiased estimator $\widehat{f}\ (\vec{x})$ for the concave objective function $f(\vec{x})$ as well as an unbiased estimator $(\widehat{\nabla f})=\nabla \widehat{f}$ for its gradient $\nabla f$.

This unbiased estimator $\widehat{f}\ (\vec{x})$ of the objective function $f(\vec{x})$ can be expressed as follows:

$$\widehat{f}(\vec{x}) = \int_0^\infty \sum_{i=1}^n \widehat{P}_{\vec{x}}(Y_i < h_i^{-1}(t))dt \ ,$$

where $h_i^{-1}$ ($R^+ \to R^+$) is the inverse of the utility function $h_i$, and $\widehat{P}_{\vec{x}}(Y_i < h_i^{-1}(t))$ is the estimator of the probability $P_{\vec{x}}(Y_i > t)$, $i \in V$.

The unbiased gradient estimator $\nabla \widehat{f}\ (\vec{x})$ can be expressed as follows:

$$\frac{\partial \widehat{f}(\vec{x})}{\partial x_i} = \int_0^\infty \sum_{j=1}^n \frac{\partial}{\partial x_i}(\widehat{P}_{\vec{x}}(Y_j < h_j^{-1}(t)))dt \ .$$

This unbiased estimator $\widehat{f}\ (\vec{x})$ has the two following properties. Firstly, it is concave and infinitely differentiable, and then the gradient descent is provably efficient in maximizing $\widehat{f}\ (\vec{x})$. Secondly, $\widehat{f}\ (\vec{x})$ requires random bits only for sampling from the contact processes defined by $q_{ij}$, and then no sampling from the content distribution process is needed (i.e. $\widehat{f}\ (\vec{x})$ is deterministic in terms of $\vec{x}$). For brevity, one will only consider hereafter the case where the utility functions $h_i$, $i \in V$, are positive and strictly decreasing.

The Lemma given in Annex 1 ("for $Y_i$ the age of content at user i in steady state,

$$P_{\vec{x}}(Y_i > t) = P_{\vec{x}}(Y_i \geq t) = E\left[e^{-\sum_{j=1}^n x_j(t-s_{ij})+}\right] \ ,$$ where the expectation is taken over the latencies $s_{ij}$") can be used to estimate the unbiased estimators of the probabilities (or densities) $\widehat{P}_{\vec{x}}(Y_i < h_i^{-1}(t))$ of the ages $Y_i$.

Indeed, the above expression of the unbiased gradient estimator $\nabla \widehat{f}\ (\vec{x})$ can be re-written as follows:

$$\frac{\partial \widehat{f}(\vec{x})}{\partial x_i} = \int_0^\infty \sum_{j=1}^n E[(h_j^{-1}(t)-s_{ji})_+ \left[e^{-\sum_{l=1}^n x_l(h_l^{-1}(t)-s_{il})+}\right]]dt \ .$$

So, when the second sub-module CM12 has received the different latencies $s_{ij}$ and utility functions $h_i(Y_i)$, it can determine the unbiased gradient estimator $\nabla \widehat{f}\ (\vec{x})$ from the last expression.

Then, the second computation module CM2 may apply (during the second step (ii)) an appropriate gradient descent algorithm to this unbiased gradient estimator $\nabla \widehat{f}\ (\vec{x})$ in order to determine the optimal n-dimensional injection rate vector $\vec{x}$ for the n user mobile telephones $CE_i$. For this purpose one may, for instance, use a constant small gain with threshold of minimum improvement to stop the computation if the improvement carried out is not large enough.

The second manner is called "distributed" manner. It consists in determining, during the first main step (i) and in each of the n user mobile telephones $CE_i$ (by means of their first sub-modules CM11) n-1 estimations of the gradient of the expectations of the non-increasing utility functions $h_j(Y_j)$, which depend respectively on the age $Y_j$ of availability of a content originating from the n-1 other mobile telephones $CE_j$ ($j \neq i$), and then in determining (in the network equipment CS (by means of its second sub-module CM12)) the objective function gradient $\nabla f$ from the whole non-increasing utility function expectation gradients estimated by the n user mobile telephones $CE_i$.

To this effect, the first sub-module CM11 (of the second computation device D2) of each user mobile telephone $CE_i$ may first generate a dummy event, at an arbitrary time instant (for instance t = 0), to pretend its user mobile telephone $CE_i$ has received an update of a content.

Then, the first sub-module CM11 of each user mobile telephone $CE_i$ may determine a first age $Y_i(t)$ which is representative of the time instant at which its user mobile telephone $CE_i$ has received this content and a second age $\widetilde{Y_i}(t)$ which is representative of the time instant at which it has generated the dummy event for this content. From there on, it maintains both the first (and true) age $Y_i(t)$ and a second (and dummy) age $\widetilde{Y_i}(t)$, which has been artificially set to zero (here at time t = 0), but which otherwise evolves as $Y_i(t)$.

Then, each time a user mobile telephone $CE_i$ contacts (or meets) one of the n-1 other user mobile telephones $CE_j$ of its group, its first sub-module CM11 may order to it to communicate its first age $Y_i(t)$ and its second age $\widetilde{Y_i}(t)$ to the other contacted user mobile telephone $CE_j$ ($j \neq i$).

In other words when two user mobile telephones $CE_k$ and $CE_l$ meet, if the user mobile telephone $CE_k$ currently maintains a dummy age $\widetilde{Y}_k(t)$ for a chosen content, it then communicates to the user mobile telephone $CE_l$ both its true age $Y_k(t)$ and its dummy age $\widetilde{Y}_k(t)$. From there on, the user mobile telephone $CE_l$ also runs both a true age $Y_k^l(t)$ and a dummy age $\widetilde{Y}_k^l(t)$. It is important to note that, for any user mobile telephone $CE_k$, the true age $Y_k^l(t)$ and dummy age $\widetilde{Y}_k^l(t)$ will eventually coincide (this is clearly forced when the service provider injects new content at a user mobile telephone $CE_k$).

Once the first sub-module CM11 (of the second computation device D2) of a user mobile telephone $CE_i$ has determined true ages $Y_i^j(t)$ and dummy ages $\widetilde{Y}_i^j(t)$, for anyone of the n-1 other user mobile telephones $CE_j$ ($j \neq i$) of its group, it determines n-1 estimations $\Delta_{\widehat{x},i}$ ($j$) of non-increasing utility function expectation gradient associated respectively to the n-1 other user mobile telephones $CE_j$ ($j \neq i$). Each of these n-1 estimations $\Delta_{\widehat{x},i}$ ($j$) is representative of the result of a temporal integration of the difference between a non-increasing utility function $h_i(\widetilde{Y}_i^j(t))$, which depends on the second age $\widetilde{Y}_i^j(t)$ (representative of the time instant of generation of the dummy event by the user mobile telephone $CE_j$), and a non-increasing utility function $h_i(Y_i^j(t))$, which depends on the first age $Y_i^j(t)$ (representative of the time instant of reception of this content by the user mobile telephone $CE_j$).

So, each estimation $\Delta_{\widehat{x},i}$ ($j$) can be expressed as follows:

$$\Delta_{\widehat{x},i}(j) = \int_{t_{start}}^{t_{end}} \left[ h_j(\widehat{Y}_j(t)) - h_j(Y_j(t)) \right] dt$$
$$= \int_0^\infty \left[ h_j(\widehat{Y}_j(t)) - h_j(Y_j(t)) \right] dt .$$

It is important to note that the estimation $\Delta_{\widehat{x},i}$ ($j$) can be considered as the overall increase in utility for user j due to the addition of a dummy update into the mobile telephone $CE_i$ of user i. This has strong ties with the notion of "sample path shadow price" which has been introduced in the document of R. Gibbens and F.P. Kelly, "Resource pricing and the evolution of congestion control", Automatica (35) 1999, pages 1969-1985. Indeed, these authors define this quantity as the pathwise cost increase due to a particular packet.

It is also important to note that the creation of one dummy age by a user mobile telephone $CE_i$ allows all the other n-1 user mobile telephones $CE_j$ to evolve.

One can show that the estimation $\Delta_{\hat{x},i}$ (j) is an unbiased estimate of the gradient $\dfrac{\partial}{\partial x_i} E_{\bar{x}}\Big[h_j(Y_j(t))\Big]$ of the

expected utility function $E_{\bar{x}}\Big[h_j(Y_j(t))\Big]$.

Indeed, in this second implementation, the unbiased gradient $\nabla f(\vec{x})$ can be expressed as follows:

$$\frac{\partial f(\vec{x})}{\partial x_i} = \sum_{j=1}^{n} \frac{\partial}{\partial x_i}(\hat{E}_{\bar{x}}(h_j(y_j(t)))),$$

which can be re-written as follows:

$$\frac{\partial f(\vec{x})}{\partial x_i} = \sum_{j=1}^{n} \int_{0}^{\infty} (h_j[\tilde{y}_j^i(t)] - h_j[y_j^i(t)])dt$$

$$= \sum_{j=1}^{n} \Delta_{\hat{x},i}(j)$$

.

This results from the following reasoning.

Let some stationary process $\{Z_t\}_{t \geq 0}$ be driven by some Poisson process N with intensity y > 0. To stress the dependency of this stationary process on process N, one writes $Z_t(N)$. Then under suitable integrability assumptions, it

holds that $\dfrac{\partial}{\partial y} E_y[Z_t(N)] = E_y\left[\int_{0}^{\infty} [Z_t(N+\delta_0) - Z_t(N)]dt\right]$.

In this last expression, Ey denotes the expectation when the intensity of N is equal to y, and N + $\delta_0$ denotes the process consisting of the events occurring in the Poisson process N, plus an additional event occurring at time t = 0. One means here by "process" a random variable with values in the subset of points of the real line. So for any given process N, N + $\delta_0$ denotes the process when the point {0} is added to the subset of N. This is a random object, hence it may be defined for any Ω, in the sample space as $(N + \delta_0)(\Omega) = N(\Omega) \cup \{0\}$.

In other words, an unbiased estimate of the derivative in the left-hand side of the last expression is given by the integral $\int_{0}^{\infty} [Z_t(N+\delta_0) - Z_t(N)]dt$.

In the context of the invention, the process $Z_t$ is the instant utility function $\sum_{j} h_j(Y_j(t))$. Thus the above

expression can be interpreted as the overall additional utility brought to user mobile telephone $CE_j$ by an extra content injection at node i at time t = 0.

So, provided that a user mobile telephone $CE_j$ (and more precisely its second computation device D2) keeps track of each pair of actual age and dummy age (from the time $t_{start}$ when it first received this dummy age till the time

$t_{end}$ when the actual age and the associated dummy age coincide), it can then locally compute each estimation $\Delta_{\hat{x},i}$ (j).

Figure 2 illustrates how this estimation $\Delta_{\hat{x},i}$ (j) can be effectively computed in case where the first sub-module CM11 of a user mobile telephone CEi uses the first $h_a = 1_{Y/\leq \tau}$ or fourth $h_d = -Y$ utility function. In case where the first

utility function $h_a$ is used, the temporal integral is simply the length of the period during which $\tilde{Y}_j$ (in fact $\tilde{Y}_i^j(t)$) is

below $\tau$ while $Y_j$ (in fact $Y_i^j(t)$) is above $\tau$, which consists of at most one non-empty interval (t2 - t1). In case where the fourth utility function $h_d$ is used, the temporal integral is simply the area of one or more shaded parallelograms.

Once the first sub-module CM11 of a user mobile telephone $CE_i$ has determined its n-1 estimations $\Delta_{\hat{x},i}$ (j) it may order its user mobile telephone $CE_i$ to transmit them to the chosen network equipment CS (and more precisely to the second sub-module CM12, which is (in this variant) located into its first computation device D1.

For instance, this transmission may occur when the service provider injects a new content or a content update.

Once the second sub-module CM12 has received the n groups of n-1 estimations $\Delta_{\hat{x},i}$ (j) from the n user mobile telephones $CE_i$ it can compute (or determine or else estimate) an unbiased estimate $\Delta.\widehat{f}$ ($\vec{x}$) of the gradient of the objective function f($\vec{x}$). This can be done by determining each of its n coordinates, which are each defined by the following expression:

$$\frac{\partial \widehat{f}}{\partial x_i}(\vec{x}) = \sum_j \Delta_{\hat{x},i}(j) \ .$$

Once the second sub-module CM12 has determined the n coordinates of the unbiased estimate $\nabla\widehat{f}$ ($\vec{x}$) of the gradient of the objective function f($\vec{x}$) it communicates them to the second computation module CM2 of its first computation device D1. Then the second computation module CM2 applies a gradient descent algorithm to this unbiased estimate $\nabla.\widehat{f}$ ($\vec{x}$) to determine an optimal n-dimensional injection rate vector $\vec{x}$ for the n user mobile telephones CEi. For this purpose it can use the following projected gradient descent algorithm, for instance:

$$\vec{x}_{k+1} = \prod \left( \vec{x}_k + \gamma_k \nabla\widehat{f}(\vec{x}_k) \right),$$

where k is a temporal index designating a k-th injection rate vector $\vec{x}$ determined after the (k-1)-th injection rate vector but before a (k+1)-th injection rate vector, $\gamma_k$ is a positive gain parameter, and $\Pi$ designates the orthogonal projection on the set $\vec{x} \in R_+^n : \sum_i x_i \leq \mu$ .

Then, according to a stochastic approximation, it is possible, by choosing appropriate technical conditions on the sequence of gradient estimates $\nabla\widehat{f}$ ($\vec{x}_k$) and appropriate gain parameters $\gamma_k$ which guarantee convergence of the sequence $\vec{x}_k$, to maximize the objective function f($\vec{x}$). For this purpose one may, for instance, use a constant small gain with threshold.

The first computation device D1 according to the invention (and notably its second computation module CM2 and its second sub-module CM12) is preferably made of software modules, at least partly. But it could be also made of electronic circuit(s) or hardware modules, or a combination of hardware and software modules (in this case the first computation device D1 comprises also a software interface allowing interworking between the hardware and software modules). In case where it is exclusively made of software modules it can be stored in a memory of the network equipment CS or in any computer software product, such as a CD-ROM, for instance, which can be read by a network equipment CS.

Moreover, the second computation device D2 according to the invention (and notably its first sub-module CM11) is preferably made of software modules, at least partly. But it could be also made of electronic circuit(s) or hardware modules, or a combination of hardware and software modules (in this case the second computation device D2 comprises also a software interface allowing interworking between the hardware and software modules). In case where it is exclusively made of software modules it can be stored in a memory of a user communication equipment $CE_i$.

The invention is not limited to the embodiments of method, system, first computation device and second computation device described above, only as examples, but it encompasses all alternative embodiments which may be considered by one skilled in the art within the scope of the claims hereafter.

**ANNEX 1**

Let us denote by $s_{ij}$ the time required for transmitting a content from the communication equipment $CE_i$ of user i to the communication equipment $CE_j$ of user j through the communication network CN. In other words $s_{ij}$ is the latency until a message generated by the user communication equipment $CE_i$ reaches the user communication equipment $CE_j$ if flooding is used.

Let us further denote by $(.)_+$ the operation consisting in chosing the maximum value between "." and 0: $(.)_+ \equiv$ max(., 0).

Then one has the following Lemma: for $Y_i$ the age of content at user i in steady state,

$$P_{\vec{x}}(Y_i > t) = P_{\vec{x}}(Y_i \geq t) = E\left[e^{-\sum_{j=1}^{n} x_j(t - s_{ij})+}\right],$$ where the expectation is taken over the latencies $s_{ij}$.

This Lemma can be proved as follows:

$$P_{\vec{x}}(Y_i > t) = P_{\vec{x}}(\min_{j \in A_i^T(\infty)} \{s_{ij}^T + Z_j(T - s_{ij}^T)\})$$
$$= P_{\vec{x}}(\min_{j \in A_i^T(t)} \{s_{ij}^T + Z_j(T - s_{ij}^T)\})$$

as, by definition, $s_{ij}^T > t$ for any $j \notin A_i^T(t)$. $A_i(t)$ (c V, t ≥ 0) is the set (or group) of users that have a content at the time t, given that at time 0 only user i has this content, and $s_{ij}^T = \inf_{t \geq 0}\{t \mid j \in A_i^T(t)\}$. $Z_i(t)$ is the elapsed time since user i downloaded content directly from the service provider, and $Y_i(t)$ is the age of the content stored into the mobile telephone $CE_i$ of user i at time t. Then, for all T ≥ 0 and all i ∈ V, $Y_i(t) = \min_{j \in A_i^T(\infty)} \{s_{ij}^T + Z_j(T - s_{ij}^T)\}$.

So, one has

$$P_{\vec{x}}(Y_i > t) = P_{\vec{x}}\left(\bigcap_{j \in A_i^T(t)}\{s_{ij}^T + Z_j(T - s_{ij}^T)\} > t\right)$$
$$= P_{\vec{x}}\left(\bigcap_{j \in A_i^T(t)}\{Z_j(T - s_{ij}^T)\} > t - s_{ij}^T\right).$$

The random variables $Z_j$, j = 1, ..., n, are independent, and they are also independent of $s_{ij}$. In steady state, they are exponentially distributed with parameters $x_j$. Furthermore, one can show that in steady state the backwards growth process $A_i^T(t)$ is identically distributed to the forwards growth process of the $A_i(t)$.

A growth process starting at i can be defined by the expression $\{A_i(t), t \geq 0\}$, where $A_i(t) = \{j, s.t. s_{ij} \leq t\}$ ($s_{ij}$ is the first time that user j receives a content.

It results from the above observations that $P_{\vec{x}}(Y_i > t) = E\left[\prod_{j \in A_i(t)} e^{-x_i(t - s_{ij})}\right] = E\left[e^{-\sum_{j \in A_i(t)} x_i(t - s_{ij})}\right]$, and the proof of lemma follows as j ∈ $A_i(t)$ if $s_{ij} \leq t$. The equality to $P_{\vec{x}}(Y_i \geq t)$ can be derived by repeating the above steps for this case, and is due to the continuity of the density of an exponential random variable.

If one now considers a user i ∈ V, t ≥ 0, and condition on $s_{ij}$, j ∈ V, then, the function $e^{-\sum_{j=1}^{n} x_j (t-s_{ij})+}$ is convex in $\vec{x}$, as it is a composition of a convex and a linear function. Moreover, if every element in a family of functions $g(\vec{x}, u)$, u ∈ Ω, is convex in $\vec{x}$ and v is a positive measure in Ω, then the integral $\int_{\Omega} g(\vec{x}, u) dv$ is also convex. Hence,

$$E\left[e^{-\sum_{j=1}^{n} x_j (t-s_{ij})+}\right]$$ is convex in $\vec{x}$ and, for every i ∈ V and every t ≥ 0, $P_{\vec{x}}(Y_i \leq t)$ is convex in $\vec{x}$. $P_{\vec{x}}(.)$ is the probability of the event ".".

Let now h : $R_+ \to R$ be a non-increasing function. One will now show that, for every i ∈ V, $E_{\vec{x}}\left[h(Y_i)\right]$ is concave.

For this purpose, one supposes first that h ≥ 0. So one has:

$$E_{\vec{x}}\left[h(Y_i)\right] = \int_0^\infty P_{\vec{x}}(h(Y_i) > z) dz = \int_0^\infty P_{\vec{x}}(Y_i \in h^{-1}(I_z)) dz \ ,$$

where h⁻¹ is the inverse mapping of the utility function h and $I_z = (z, \infty)$.

Since h is non-increasing, h⁻¹ ($I_z$) is equal to 0, or belongs to $R_+$ or to an interval of the form [0, y]. $P_{\vec{x}}(Y_i \in h^{-1}(I_z))$ being concave, then $E_{\vec{x}}\left[h_i(Y_i)\right]$ is concave as it is the case of the integral of a family of parametrized concave functions over a positive measure.

The above argument can be extended to real non-increasing functions h : $R_+ \to R$ by noting that

$$E_{\vec{x}}\left[h_i(Y_i)\right] = \int_0^\infty P_{\vec{x}}(h(Y_i) > z) dz - \int_{-\infty}^0 P_{\vec{x}}(h(Y_i \leq z)) dz \ .$$

The assertion to be proved therefore follows by the fact that the sum of concave functions is concave.

**Claims**

1.  Method for computing an optimal n-dimensional vector of injection rates of content ($\vec{x}$) for n users comprising communication equipments (CE$_i$) coupled to a communication network, **characterized in that** it comprises the steps of: i) determining the gradient of an objective function (f($\vec{x}$)) representative of n expectations of a non-increasing utility function (h$_i$(Y$_i$)) depending on the age (Y$_i$) of availability of a content into a user communication equipment (CE$_i$), and ii) applying a gradient descent algorithm to said objective function gradient to determine said optimal n-dimensional vector of injection rates of content ($\vec{x}$).

2.  Method according to claim 1, **characterized in that** in step i) one determines said objective function gradient with latencies (s$_{ij}$) that are representative of the times required for transmitting a content from each one of said n user communication equipments (CE$_i$) to each other one of said n user communication equipments (CE$_j$) through said communication network.

3.  Method according to claim 2, **characterized in that** in step i) each of said n user communication equipments (CE$_i$) determines n-1 latencies (s$_{ij}$) and one non-increasing utility function (h$_i$(Y$_i$)), and then one determines said objective function gradient from said latencies (s$_{ij}$) and non-increasing utility functions (h$_i$(Y$_i$)) determined by said n user communication equipments (CE$_i$).

4.  Method according to claim 2, **characterized in that** in step i) each of said n user communication equipments (CE$_i$) determines n-1 contact rates (q$_{ij}$), each representative of the rate at which two of said user communication equipments (CE$_i$, CE$_j$) contact each other, and one non-increasing utility function (h$_i$(Y$_i$)), then each of said n user communication equipments (CE$_i$) deduces n-1 latencies (s$_{ij}$) from said n-1 contact rates (q$_{ij}$), and then one determines said objective function gradient from said latencies ($s_{ij}$) and non-increasing utility functions ($h_i(Y_i)$) deduced or determined by said n user communication equipments ($CE_i$).

5. Method according to claim 1**, characterized in that** in step i) each of said n user communication equipments ($CE_i$) determines n-1 estimations of the gradient of the expectations of the non-increasing utility functions ($h_j(Y_j)$) depending on the age ($Y_j$) of availability of a content originating from said n-1 other user communication equipments ($CE_j$), and then one determines said objective function gradient from said non-increasing utility function expectation gradients estimated by said n user communication equipments ($CE_i$).

6. Method according to claim 5, **characterized in that** at some arbitrary time instant(s) each of said n user communication equipments ($CE_i$) generates a dummy event to pretend it has received an update of said content, **in that** each time one of said n user communication equipments ($CE_i$) contacts another one of said n user communication equipments ($CE_j$), it communicates to the latter a first age ($Y_i(t)$) representative of the time instant at which it has received said content and a second age ($\widetilde{Y}_i(t)$) representative of the time instant at which it has generated said dummy event for said content, and **in that** in step i) each of said n user communication equipments ($CE_i$) determines n-1 estimations of non-increasing utility function expectation gradient associated respectively to said n-1 other user communication equipments ($CE_j$), each estimation being representative of the result of a temporal integration of the difference between a non-increasing utility function $\left(h_i(\widetilde{Y}_i^{\,j}(t))\right)$, depending on the second age $\left(\widetilde{Y}_i^{\,j}(t)\right)$ representative of the time instant of generation of said dummy event by said user communication equipment ($CE_j$), and a non-increasing utility function $\left(h_i(Y_i^{\,j}(t))\right)$, depending on the first age $\left(Y_i^{\,j}(t)\right)$ representative of the time instant of reception of said content by said user communication equipment ($CE_j$), and then in step ii) one determines said objective function gradient from said estimations of non-increasing utility function expectation gradients determined by said n user communication equipments ($CE_i$).

7. System for computing an optimal n-dimensional vector of injection rates of content ($\vec{x}$) for n users comprising communication equipments ($CE_i$) coupled to a communication network, **characterized in that** it comprises i) first computation means (CM1) arranged for determining the gradient of an objective function ($f(\vec{x})$) representative of n expectations of a non-increasing utility function ($h_i(Y_i)$) depending on the age ($Y_i$) of availability of a content into a user communication equipment ($CE_i$), and ii) second computation means (CM2) arranged for applying a gradient descent algorithm to said objective function gradient to determine said optimal n-dimensional vector of injection rates of content ($\vec{x}$).

8. System according to claim 7, **characterized in that** said first computation means (CM1) is arranged for determining said objective function gradient with latencies ($s_{ij}$) that are representative of the times required for transmitting a content from each one of said n user communication equipments ($CE_i$) to each other one of said n user communication equipments ($CE_j$) through said communication network.

9. System according to claim 8, **characterized in that** said first computation means (CM1) comprises i) first sub-means (CM11) located into each of said n user communication equipments ($CE_i$) and each arranged for determining locally n-1 latencies ($s_{ij}$) and one non-increasing utility function ($h_i(Y_i)$), and ii) a centralized second sub-means (CM12) arranged for determining said objective function gradient from said latencies ($s_{ij}$) and non-increasing utility functions ($h_i(Y_i)$) determined by said first sub-means (CM11) of said n user communication equipments ($CE_i$).

10. System according to claim 8, **characterized in that** said first computation means (CM1) comprises i) first sub-means (CM11) located into each of said n user communication equipments ($CE_i$) and each arranged for determining locally n-1 contact rates ($q_{ij}$), each representative of the rate at which two of said user communication equipments ($CE_i$, $CE_j$) contact each other, and one non-increasing utility function ($h_i(Y_i)$), then for deducing n-1 latencies ($s_{ij}$) from said n-1 contact rates ($q_{ij}$), and ii) a centralized second sub-means (CM12) arranged for determining said objective function gradient from said latencies ($s_{ij}$) and non-increasing utility functions ($h_i(Y_i)$) deduced or determined by said n user communication equipments ($CE_i$).

11. System according to claim 7, **characterized in that** said first computation means (CM1) comprises i) first sub-means (CM11) located into each of said n user communication equipments ($CE_i$) and each arranged for determining n-1 estimations of the gradient of the expectations of the non-increasing utility functions ($h_j(Y_j)$) depending on the

age ($Y_j$) of availability of a content originating from said n-1 other user communication equipments ($CE_j$), and ii) a centralized second sub-means (CM12) arranged for determining said objective function gradient from said non-increasing utility function expectation gradients estimated by said first sub-means (CM11) of the n user communication equipments ($CE_i$).

12. System according to claim 11, **characterized in that** each first sub-means (CM11) of a user communication equipment ($CE_i$) is arranged i) for generating a dummy event, at an arbitrary time instant, to pretend its user communication equipment ($CE_i$) has received an update of said content, ii) for determining a first age ($Y_i(t)$) representative of the time instant at which its user communication equipment ($CE_i$) has received said content and a second age ($\widetilde{Y}_i(t)$) representative of the time instant at which it has generated said dummy event for said content, iii) each time its user communication equipment ($CE_i$) contacts another one of said n user communication equipments ($CE_j$), for ordering its user communication equipment ($CE_i$) to communicate said first age ($Y_i(t)$) and said second age ($\widetilde{Y}_i(t)$) to said other contacted user communication equipment ($CE_j$), and iv) for determining n-1 estimations of non-increasing utility function expectation gradient associated respectively to said n-1 other user communication equipments ($CE_j$), each estimation being representative of the result of a temporal integration of the difference between a non-increasing utility function $\left( h_i \left( \widetilde{Y}_i^{\,j}(t) \right) \right)$, depending on the second age $\left( \widetilde{Y}_i^{\,j}(t) \right)$ representative of the time instant of generation of said dummy event by said user communication equipment ($CE_j$), and a non-increasing utility function $\left( h_i \left( Y_i^{\,j}(t) \right) \right)$, depending on the first age $\left( Y_i^{\,j}(t) \right)$ representative of the time instant of reception of said content by said user communication equipment ($CE_j$), and **in that** said centralized second sub-means (CM12) is arranged for determining said objective function gradient from said estimations of non-increasing utility function expectation gradients determined by said first sub-means (CM11) of said n user communication equipments ($CE_i$).

13. Computation device (D1) for a network equipment (CS) connected to a communication network to which are coupled communication equipments ($CE_i$) of users, **characterized in that** it comprises a second computation means (CM2) arranged for applying a gradient descent algorithm to a gradient of an objective function ($f(\vec{x})$) representative of n expectations of a non-increasing utility function ($h_i(Y_i)$) depending on the age ($Y_i$) of availability of a content into n different user communication equipments ($CE_i$), in order to determine an optimal n-dimensional vector of injection rates of content ($\vec{x}$) for said n user communication equipments ($CE_i$).

14. Computation device according to claim 13, **characterized in that** it comprises a centralized second sub-means (CM12) arranged for determining said objective function gradient from latencies ($s_{ij}$), determined by said n user communication equipments ($CE_i$) and representative of the times required for transmitting a content from each one of said n user communication equipments ($CE_i$) to each other one of said n user communication equipments ($CE_j$) through said communication network, and non-increasing utility functions ($h_i(Y_i)$) determined by said n user communication equipments ($CE_i$).

15. Computation device according to claim 13, **characterized in that** it comprises a centralized second sub-means (CM12) arranged for determining said objective function gradient from n groups respectively determined by said n user communication equipments ($CE_i$), and each comprising n-1 estimations of the gradient of the expectations of non-increasing utility functions ($h_j(Y_j)$) depending on the age ($Y_j$) of availability of a content originating from n-1 user communication equipments ($CE_j$) differing from its associated user communication equipment ($CE_i$).

16. Computation device (D2) for a user communication equipment ($CE_i$) connected to a communication network, **characterized in that** it comprises a first sub-means (CM11) arranged for determining locally n-1 latencies ($s_{ij}$), representative of the times required for transmitting a content from its user communication equipment ($CE_i$) to n-1 other user communication equipments ($CE_j$) through said communication network, and one non-increasing utility function ($h_i(Y_i)$), depending on the age ($Y_i$) of availability of a content into its user communication equipment ($CE_i$).

17. Computation device according to claim 16, **characterized in that** said first sub-means (CM11) is arranged for determining locally n-1 contact rates ($q_{ij}$), each representative of the rate at which two of said user communication equipments ($CE_i$, $CE_j$) contact each other, and one non-increasing utility function ($h_i(Y_i)$), then for deducing n-1 latencies ($s_{ij}$) from said n-1 contact rates ($q_{ij}$).

18. Computation device according to one of claims 16 and 17, **characterized in that** said first sub-means (CM11) is arranged for ordering its user communication equipment (CE$_i$) to transmit said n-1 determined latencies (s$_{ij}$) and said determined non-increasing utility function (h$_i$(Y$_i$)) to a chosen network equipment (CS) connected to said communication network.

**19.** Computation device (D2') for a user communication equipment (CE$_i$) connected to a communication network, **characterized in that** it comprises a first sub-means (CM11) arranged i) for generating a dummy event, at an arbitrary time instant, to pretend its user communication equipment (CE$_i$) has received an update of said content, ii) for determining a first age (Y$_i$(t)) representative of the time instant at which its user communication equipment (CE$_i$) has received said content and a second age $(\widetilde{Y}_i(t))$ representative of the time instant at which it has generated said dummy event for said content, iii) each time its user communication equipment (CE$_i$) contacts of said n-1 other user communication equipments (CE$_j$), for ordering its user communication equipment (CE$_i$) to communicate said first age (Y$_i$(t)) and said second age $(\widetilde{Y}_i(t))$ to said other contacted user communication equipment (CE$_j$), and iv) for determining n-1 estimations of non-increasing utility function expectation gradient associated respectively to said n-1 other user communication equipments (CE$_j$), each estimation being representative of the result of a temporal integration of the difference between a non-increasing utility function $\left( h_i\!\left( \widetilde{Y}_i^{\,j}(t) \right) \right)$, depending on the second age $\left( \widetilde{Y}_i^{\,j}(t) \right)$ representative of the time instant of generation of said dummy event by said user communication equipment (CE$_j$), and a non-increasing utility function $\left( h_i\!\left( Y_i^{\,j}(t) \right) \right)$, depending on the first age $\left( Y_i^{\,j}(t) \right)$ representative of the time instant of reception of said content by said user communication equipment (CE$_j$).

**20.** Computation device according to claim 19, **characterized in that** said first sub-means (CM11) is arranged for ordering its user communication equipment (CE$_i$) to transmit said n-1 estimations to a chosen network equipment (CS) connected to said communication network (CN).

FIG.1

FIG.2

**European Patent Office**
Europäisches Patentamt
European Patent Office
Office européen des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STRATIS IOANNIDIS, AUGUSTIN CHAINTREAU, LAURENT MASSOULIÉ: "Optimal and Scalable Distribution of Content Updates over a Mobile Social Network." TECHNICAL REPORT, THOMSON RESEARCH, CR-PRL-2008-08-001, [Online] 29 August 2008 (2008-08-29), XP002525576 On line Retrieved from the Internet: URL:www.thlab.net/tr/CR-PRL-2008-08-0001.p df> [retrieved on 2009-04-27] * abstract * * page 1, left-hand column, line 1 - page 1, right-hand column, line 19 * * page 3, left-hand column, line 23 - page 4, right-hand column, line 22 * * page 6, left-hand column, line 43 - page 8, left-hand column, line 19 * ----- | 1-20 | INV. H04L29/06 |
| L | STRATIS IOANNIDIS, AUGUSTIN CHAINTREAU, LAURENT MASSOULIÉ: "CR-PRL-2008-08-0001 publication source"[Online] 4 September 2008 (2008-09-04), XP002525615 On line Retrieved from the Internet: URL:http://www.thlab.net/tr/> [retrieved on 2009-04-28] ----- -/-- | 1-20 | **TECHNICAL FIELDS SEARCHED (IPC)** H04L |

The present search report has been drawn up for all claims

| Place of search | Date of completion of the search | Examiner |
|---|---|---|
| Munich | 28 April 2009 | López Monclús, I |

EPO FORM 1503 03.82 (P04C01)

Europäisches
Patentamt

European
Patent Office

Office européen
des brevets

# EUROPEAN SEARCH REPORT

Application Number

EP 08 30 5893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | PAOLO COSTA ET AL: "Socially-aware routing for publish-subscribe in delay-tolerant mobile ad hoc networks" IEEE JOURNAL ON SELECTED AREAS IN COMMUNICATIONS, IEEE SERVICE CENTER, PISCATAWAY, US, vol. 26, no. 5, 1 June 2008 (2008-06-01), pages 748-760, XP011215664 ISSN: 0733-8716 * abstract * * page 749, right-hand column, line 1 - page 752, left-hand column, line 5 * ----- | 1-20 | |
| D,A | ANDREW G MIKLAS ET AL: "Exploiting Social Interactions in Mobile Systems" UBICOMP 2007: UBIQUITOUS COMPUTING; [LECTURE NOTES IN COMPUTER SCIENCE], SPRINGER BERLIN HEIDELBERG, BERLIN, HEIDELBERG, vol. 4717, 16 September 2007 (2007-09-16), pages 409-428, XP019070913 ISBN: 978-3-540-74852-6 * the whole document * ----- | 1-20 | TECHNICAL FIELDS SEARCHED (IPC) |

The present search report has been drawn up for all claims

| Place of search | Date of completion of the search | Examiner |
|---|---|---|
| Munich | 28 April 2009 | López Monclús, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. Yoneki ; P. Hui ; S. Chan ; J. Crowcroft.** A socio-aware overlay for publish/subscribe communication in delay tolerant networks. *Proc. of ACM MSWiM,* 2007
- **P. Costa ; C. Mascolo ; M. Musolesi ; G.-P. Picco.** Socially-aware routing for publish-subscribe in delay-tolerant mobile ad hoc networks. *IEEE JSAC Special issue on Delay-Tolerant Networks,* 2008
- **A. Balasubramanian ; B. Levine ; A. Venkataramani.** DTN routing as a resource allocation problem. *Proc. of ACM SIGCOMM,* 2007

- **A. G. Miklas ; K. K. Gollu ; K. K. W. Chan ; S. Saroiu ; P. K. Gummadi ; E. de Lara.** Exploiting social interactions in mobile systems. *Proc. of Ubicomp,* 2007
- **V. Srinivasan ; M. Motani ; W. T. Ooi.** Analysis and implications of student contact patterns derived from campus schedules. *Proc. of ACM MobiCom,* 2006
- **R. Gibbens ; F.P. Kelly.** Resource pricing and the evolution of congestion control. *Automatica,* 1999, 1969-1985